# EUROPEAN PATENT SPECIFICATION

(11) **EP 4 035 905 B1**
(45) Date of publication and mention of the grant of the patent: **06.11.2024**
(21) Application number: 20878622.8
(22) Date of filing: 24.09.2020
(51) Int. Cl.: B60C 1/00, C08C 19/02, C08F 36/04, C08L 15/00, C08L 25/04, C08L 45/00, C08K 3/04, C08K 3/36, C08F 236/10

(54) **RUBBER COMPOSITION AND TIRE**
KAUTSCHUKZUSAMMENSETZUNG UND REIFEN
COMPOSITION DE CAOUTCHOUC ET PNEU

(30) Priority: 23.10.2019 JP 2019192746
(43) Date of publication of application: 03.08.2022
(73) Proprietor: Sumitomo Rubber Industries, Ltd., Kobe-shi, Hyogo 651-0072 (JP)
(72) Inventor: YASUDA, Rie, Kobe-shi, Hyogo 651-0072 (JP); WASHIZU, Kensuke, Kobe-shi, Hyogo 651-0072 (JP)
(74) Representative: Manitz Finsterwald Patent- und Rechtsanwaltspartnerschaft mbB
(86) International application number: PCT/JP2020/035912
(87) International publication number: WO 2021/079676

(56) References cited:
- EP-A1- 1 514 901
- EP-A1- 3 181 630
- WO-A1-2016/039008
- JP-A- 2018 095 776
- JP-A- H02 147 646
- JP-B2- 5 122 852

## Description

### TECHNICAL FIELD

The present disclosure relates to a rubber composition and a tire.

### BACKGROUND ART

In general, tire rubbers, which contain a large number of double bonds, tend to become hardened over time due to recrosslinking. Moreover, the plasticizers contained in tire rubbers generally have a low molecular weight and tend to escape from the rubbers. The escape of plasticizers accelerates hardening of the rubbers. The hardening of the rubbers then results in a change in tire performance such as wet grip performance. Thus, there is room for improvement in that tire rubbers may fail to provide stable tire performance.

Patent Literature 1 discloses a technique in which a rubber (hydrogenated copolymer) which is hydrogenated to reduce the number of double bonds is used in a tire. This technique can reduce a change in hardness over time to some extent. However, in recent years where tire life has been extended, it has become desirable to further improve enduring performance.

Patent Literature 2 discloses a pneumatic tire, formed from a rubber composition, the rubber composition containing: a hydrogenated copolymer obtained by copolymerization of an aromatic vinyl compound and a conjugated diene compound, the hydrogenated copolymer having a degree of hydrogenation of the conjugated diene units of 75 mol% or more; and a resin having a softening point of 60°C to 120°C.

A further pneumatic tire is described in Patent Literature 3

### CITATION LIST

### PATENT LITERATURE

Patent Literature 1: WO 2016/039005
Patent Literature 2: EP 3 181 630 A1
Patent Literature 3: JP 5 122852 B2

### SUMMARY OF DISCLOSURE

### TECHNICAL PROBLEM

The present disclosure aims to solve the above problem and provide a rubber composition and a tire which have excellent enduring performance as well as good fuel economy and wet grip performance.

### SOLUTION TO PROBLEM

The present disclosure relates to a rubber composition, containing: at least one hydrogenated conjugated diene polymer (A) having a weight average molecular weight of 100,000 or more and a degree of hydrogenation of 75 mol% or higher; at least one hydrogenated conjugated diene polymer (B) having a weight average molecular weight of less than 100,000; and at least one resin having a softening point of 20°C or higher,
wherein the hydrogenated conjugated diene polymer (B) is a copolymer of a conjugated diene compound and an aromatic vinyl compound.

Preferably, an absolute value of a difference in degree of hydrogenation between the hydrogenated conjugated diene polymer (A) and the hydrogenated conjugated diene polymer (B) is 90 mol% or less.

Preferably, the hydrogenated conjugated diene polymer (B) has a degree of hydrogenation of 25 mol% or higher.

Preferably, the hydrogenated conjugated diene polymer (B) is present in an amount of 5 parts by mass or more per 100 parts by mass of rubber components in the rubber composition.

Preferably, the hydrogenated conjugated diene polymer (B) and the resin are present in a combined amount of 40 parts by mass or less per 100 parts by mass of rubber components in the rubber composition.

Preferably, a change in hardness of the rubber composition after immersion in acetone for 24 hours is 20% or less of the hardness before the immersion.

Preferably, a mass of the rubber composition after immersion in acetone for 24 hours is 80% or more of the mass before the immersion.

Preferably, the rubber composition contains at least one filler selected from the group consisting of carbon black and silica.

Preferably, the resin is at least one selected from the group consisting of coumarone-indene resins, styrene resins, and terpene resins.

Preferably, the hydrogenated conjugated diene polymer (A) has a weight average molecular weight of 200,000 to 1,000,000 and a degree of hydrogenation of 90 to 98 mol%, and the hydrogenated conjugated diene polymer (B) has a weight average molecular weight of 1,000 to 6,000 and a degree of hydrogenation of 40 to 98 mol%.

Preferably, the hydrogenated conjugated diene polymer (A) and the hydrogenated conjugated diene polymer (B) are each a copolymer of a conjugated diene compound and an aromatic vinyl compound; the hydrogenated conjugated diene polymer (A) contains 10 to 50% by mass of structural units derived from at least one aromatic vinyl compound; and the hydrogenated conjugated diene polymer (B) contains 10 to 50% by mass of structural units derived from at least one aromatic vinyl compound.

Preferably, the hydrogenated conjugated diene polymer (A) is present in an amount of 80% by mass or more based on 100% by mass of rubber components in the rubber composition.

Preferably, the resin has a softening point of 30 to 130°C.

Preferably, the rubber composition contains, per 100 parts by mass of rubber components therein, 1 to 25 parts by mass of the resin, 1 to 30 parts by mass of carbon black, and 20 to 100 parts by mass of silica.

The present disclosure also relates to a tire, including a tire component containing the rubber composition.

### ADVANTAGEOUS EFFECTS OF DISCLOSURE

The present disclosure relates to a rubber composition containing a hydrogenated conjugated diene polymer (A) having a weight average molecular weight of 100,000 or more and a degree of hydrogenation of 75 mol% or higher, a hydrogenated conjugated diene polymer (B) having a weight average molecular weight of less than 100,000, and a resin having a softening point of 20°C or higher. Thus, the rubber composition provides excellent enduring performance, fuel economy, and wet grip performance.

### DESCRIPTION OF EMBODIMENTS

The present disclosure relates to a rubber composition which contains a hydrogenated conjugated diene polymer (A) having a weight average molecular weight of 100,000 or more and a degree of hydrogenation of 75 mol% or higher, a hydrogenated conjugated diene polymer (B) having a weight average molecular weight of less than 100,000, and a resin having a softening point of 20°C or higher.

The rubber composition combines the hydrogenated conjugated diene polymer (A), the hydrogenated conjugated diene polymer (B), and the resin to provide excellent enduring performance, fuel economy, and wet grip performance.

The hydrogenated conjugated diene polymer (A) has a small number of double bonds and thus is advantageously less likely to change in hardness over time. However, the hydrogenated conjugated diene polymer (A) has a lower polarity than diene rubbers commonly used in tire rubber compositions and thus is less compatible with conventional plasticizers such as liquid rubbers, so that they tend to easily bleed out.

In contrast, the hydrogenated conjugated diene polymer (B) used in the rubber composition is highly compatible with the hydrogenated conjugated diene polymer (A) and thus is less likely to bleed out. Moreover, the presence of the resin having a softening point of 20°C or higher further inhibits bleeding. It is believed that these actions provide excellent enduring performance.

Furthermore, the combined use of the hydrogenated conjugated diene polymer (A) and the hydrogenated conjugated diene polymer (B) provides a sharp temperature dependence of tan δ, resulting in good overall performance in terms of fuel economy and wet grip performance. In addition, the presence of the resin having a softening point of 20°C or higher allows the rubber composition to have a Tg within a temperature range under tire service conditions. It is believed that these actions provide excellent fuel economy and wet grip performance.

The rubber composition contains at least one hydrogenated conjugated diene polymer (A) having a weight average molecular weight of 100,000 or more and a degree of hydrogenation of 75 mol% or higher, and at least one hydrogenated conjugated diene polymer (B) having a weight average molecular weight of less than 100,000.

The hydrogenated conjugated diene polymer (A) having a high molecular weight is used as a rubber component. On the other hand, the hydrogenated conjugated diene polymer (B) having a low molecular weight is used as a plasticizer. The hydrogenated conjugated diene polymer (B) is not included in rubber components.

The hydrogenated conjugated diene polymers (A) and (B) are each obtainable by hydrogenating a polymer having structural units derived from at least one conjugated diene compound (conjugated diene units). Examples of the polymer to be hydrogenated include homopolymers of conjugated diene compounds, copolymers of two or more conjugated diene compounds, and copolymers of conjugated diene compounds and other monomers (e.g., aromatic vinyl compounds). Each of these may be used alone, or two or more of these may be used in combination. Copolymers of conjugated diene compounds and aromatic vinyl compounds are preferred among these.

Examples of the conjugated diene compounds include 1,3-butadiene, isoprene, 1,3-pentadiene, 2,3-dimethylbutadiene, 2-phenyl-1,3-butadiene, and 1,3-hexadiene. These may be used alone or in combinations of two or more. Preferred are 1,3-butadiene and isoprene, with 1,3-butadiene being more preferred.

Examples of the aromatic vinyl compounds include styrene, α-methylstyrene, 1-vinylnaphthalene, 3-vinyltoluene, ethylvinylbenzene, divinylbenzene, 4-cyclohexylstyrene, and 2,4,6-trimethylstyrene. These may be used alone or in combinations of two or more. Preferred are styrene and α-methylstyrene, with styrene being more preferred.

In other words, the hydrogenated conjugated diene polymers (A) and (B) are each preferably a hydrogenated styrene-butadiene copolymer (hydrogenated SBR).

The hydrogenated conjugated diene polymers (A) and (B) may be prepared by any polymerization method, including random polymerization and block polymerization, preferably by random polymerization. The hydrogenation may also be performed by any method under any reaction condition, including known methods and known conditions. Usually, the hydrogenation is performed at 20 to 150°C under an elevated hydrogen pressure of 0.1 to 10 MPa in the presence of a hydrogenation catalyst. Other production-related methods and conditions are also not limited, and those described in WO 2016/039005, supra may be used, for example.

Although it is sufficient that the weight average molecular weight (Mw) of the hydrogenated conjugated diene polymer (A) be 100,000 or more, it is preferably 120,000 or more, more preferably 200,000 or more, still more preferably 300,000 or more, but is preferably 1,000,000 or less, more preferably 600,000 or less, still more preferably 400,000 or less. When the Mw is within the range indicated above, the advantageous effect tends to be better achieved.

The weight average molecular weight (Mw) can be determined by gel permeation chromatography (GPC) (GPC-8000 series available from Tosoh Corporation, detector: differential refractometer, column: TSKGEL SUPERMULTIPORE HZ-M available from Tosoh Corporation) calibrated with polystyrene standards. Moreover, for polymers having a modifying group, the Mw is measured before they are thus modified because the Mw of the polymers cannot be accurately determined due to the interaction between the modifying group and the silica gel in the column.

Although it is sufficient that the degree of hydrogenation of the hydrogenated conjugated diene polymer (A) be 75 mol% or higher, based on 100 mol% of the total conjugated diene units before hydrogenation, it is preferably 80 mol% or higher, more preferably 90 mol% or higher, but is preferably 98 mol% or lower, more preferably 95 mol% or lower. When the degree of hydrogenation is within the range indicated above, the advantageous effect tends to be better achieved.

The degree of hydrogenation can be calculated from the rate of decrease in the unsaturated bond signals in the ¹H-NMR spectrum measured.

When the hydrogenated conjugated diene polymer (A) is a copolymer of a conjugated diene compound and an aromatic vinyl compound, the amount of structural units derived from at least one aromatic vinyl compound (aromatic vinyl units) is preferably 10% by mass or more, more preferably 15% by mass or more, still more preferably 20% by mass or more, but is preferably 50% by mass or less, more preferably 45% by mass or less, still more preferably 40% by mass or less, particularly preferably 33% by mass or less. When the amount is within the range indicated above, the advantageous effect tends to be better achieved.

The amount of the at least one hydrogenated conjugated diene polymer (A) based on 100% by mass of the rubber components is preferably 80% by mass or more, more preferably 90% by mass or more, still more preferably 95% by mass or more, and may be 100% by mass. When the amount is within the range indicated above, the advantageous effect tends to be better achieved.

Although it is sufficient that the weight average molecular weight (Mw) of the hydrogenated conjugated diene polymer (B) be preferably less than 100,000, it is preferably 80,000 or less, more preferably 10,000 or less, still more preferably 6,000 or less, particularly preferably 4,500 or less, but is preferably 1,000 or more, more preferably 2,000 or more. When the Mw is within the range indicated above, the advantageous effect tends to be better achieved.

The degree of hydrogenation of the hydrogenated conjugated diene polymer (B) is preferably 25 mol% or higher, more preferably 40 mol% or higher, still more preferably 50 mol% or higher, but is preferably 98 mol% or lower, more preferably 95 mol% or lower, based on 100 mol% of the total conjugated diene units before hydrogenation. When the degree of hydrogenation is within the range indicated above, the hydrogenated copolymers (A) and (B) are better compatible with each other, so that bleeding tends to be further inhibited.

The absolute value of the difference in degree of hydrogenation between the hydrogenated conjugated diene polymer (A) and the hydrogenated conjugated diene polymer (B) is preferably 90 mol% or less, more preferably 60 mol% or less, still more preferably 45 mol% or less, particularly preferably 15 mol% or less, and may be 0 mol% (the degrees of hydrogenation are substantially the same). When the absolute value is within the range indicated above, the hydrogenated copolymers (A) and (B) are better compatible with each other, so that bleeding tends to be further inhibited.

When the hydrogenated conjugated diene polymer (B) is a copolymer of a conjugated diene compound and an aromatic vinyl compound, the amount of structural units derived from at least one aromatic vinyl compound (aromatic vinyl units) is preferably 10% by mass or more, more preferably 15% by mass or more, still more preferably 20% by mass or more, particularly preferably 25% by mass or more, but is preferably 50% by mass or less, more preferably 45% by mass or less, still more preferably 40% by mass or less. When the amount is within the range indicated above, the advantageous effect tends to be better achieved.

The amount of the at least one hydrogenated conjugated diene polymer (B) per 100 parts by mass of the rubber components is preferably 5 parts by mass or more, more preferably 15 parts by mass or more, still more preferably 25 parts by mass or more, but is preferably 50 parts by mass or less, more preferably 40 parts by mass or less, still more preferably 35 parts by mass or less. When the amount is within the range indicated above, the advantageous effect tends to be better achieved.

Examples of rubber components which may be used in addition to the hydrogenated conjugated diene polymer (A) in the rubber composition include diene rubbers such as natural rubbers (NR), styrene-butadiene rubbers (SBR), polybutadiene rubbers (BR), acrylonitrile-butadiene rubbers (NBR), and styrene-isoprene-butadiene copolymer rubbers (SIBR). Each of these may be used alone, or two or more of these may be used in combination.

The rubber components and the hydrogenated conjugated diene polymer (B) may each be modified to introduce a functional group interactive with a filler such as silica into the polymer.

Examples of the functional group include amino, amide, silyl, alkoxysilyl, isocyanate, imino, imidazole, urea, ether, carbonyl, oxycarbonyl, mercapto, sulfide, disulfide, sulfonyl, sulfinyl, thiocarbonyl, ammonium, imide, hydrazo, azo, diazo, carboxyl, nitrile, pyridyl, alkoxy, hydroxy, oxy, and epoxy groups. These functional groups may be substituted. Preferred among these are amino groups (preferably amino groups whose hydrogen atom is replaced with a C1-C6 alkyl group), alkoxy groups (preferably C1-C6 alkoxy groups), and alkoxysilyl groups (preferably C1-C6 alkoxysilyl groups).

Specific examples of compounds (modifiers) having these functional groups include 2-dimethylaminoethyltrimethoxysilane, 3-dimethylaminopropyltrimethoxysilane, 2-dimethylaminoethyltriethoxysilane, 3-dimethylaminopropyltriethoxysilane, 2-diethylaminoethyltrimethoxysilane, 3-diethylaminopropyltrimethoxysilane, 2-diethylaminoethyltriethoxysilane, and 3-diethylaminopropyltriethoxysilane.

The rubber composition contains at least one resin having a softening point of 20°C or higher.

Examples of the resin include coumarone-indene resins, styrene resins, terpene resins, C5/C9 resins, and phenol resins. Each of these may be used alone, or two or more of these may be used in combination. Coumarone-indene resins, styrene resins, and terpene resins are preferred among these.

The term "coumarone-indene resins" refers to polymers mainly having structural units derived from coumarone and indene. Examples include copolymers of coumarone and indene and copolymers of coumarone and indene with other monomers (e.g., terpenes, conjugated diene compounds). Coumarone-indene resins (copolymers of coumarone and indene) are preferred among these.

The term "styrene resins" refers to liquid polymers mainly having structural units derived from styrenes. Examples include homopolymers of styrenes (e.g., styrene, α-methylstyrene), copolymers of two or more styrenes, and copolymers of styrenes and other monomers (e.g., terpenes, conjugated diene compounds). Copolymers of α-methylstyrene and styrene are preferred among these.

The term "terpene resins" refers to liquid polymers mainly having structural units derived from terpenes. Examples include homopolymers of terpenes (e.g., α-pinene, β-pinene, farnesene, myrcene), copolymers of two or more terpenes, and copolymers of terpenes and other monomers (e.g., aromatic vinyl compounds, conjugated diene compounds), such as terpene-styrene copolymers and farnesene-butadiene copolymers. Preferred among these are β-pinene resins (homopolymers of β-pinene).

Although it is sufficient that the softening point of the resin be 20°C or higher, it is preferably 30°C or higher, but is preferably 130°C or lower, more preferably 116°C or lower, still more preferably 85°C or lower. When the softening point is within the range indicated above, the overall performance in terms of fuel economy and wet grip performance tends to be better.

The softening point is determined as set forth in JIS K 6220-1:2001 using a ring and ball softening point measuring apparatus and defined as the temperature at which the ball drops down.

The resin may be commercially available from Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, Nitto Chemical Co., Ltd., Nippon Shokubai Co., Ltd., JXTG Nippon Oil & Energy Corporation, Arakawa Chemical Industries, Ltd., Taoka Chemical Co., Ltd., ExxonMobil, etc.

The amount of the at least one resin per 100 parts by mass of the rubber components is preferably 1 part by mass or more, more preferably 3 parts by mass or more, still more preferably 5 parts by mass or more, but is preferably 25 parts by mass or less, more preferably 20 parts by mass or less, still more preferably 15 parts by mass or less. When the amount is within the range indicated above, bleeding tends to be further inhibited.

The combined amount of the at least one hydrogenated conjugated diene polymer (B) and the at least one resin per 100 parts by mass of the rubber components is preferably 6 parts by mass or more, more preferably 20 parts by mass or more, still more preferably 30 parts by mass or more, but is preferably 40 parts by mass or less, more preferably 35 parts by mass or less. When the combined amount is within the range indicated above, bleeding tends to be further inhibited.

The rubber composition may contain at least one filler selected from the group consisting of carbon black and silica, preferably a combination of carbon black and silica.

Any carbon black may be used, and examples include N134, N110, N220, N234, N219, N339, N330, N326, N351, N550, and N762. Usable commercial products are available from Asahi Carbon Co., Ltd., Cabot Japan K.K., Tokai Carbon Co., Ltd., Mitsubishi Chemical Corporation, Lion Corporation, NSCC Carbon Co., Ltd., Columbia Carbon, etc. These may be used alone or in combinations of two or more.

The nitrogen adsorption specific surface area (N₂SA) of the carbon black is preferably 80 m²/g or more, more preferably 100 m²/g or more, still more preferably 114 m²/g or more, but is preferably 160 m²/g or less, more preferably 140 m²/g or less, still more preferably 125 m²/g or less. When the N₂SA is within the range indicated above, the advantageous effect tends to be better achieved.

The N₂SA of the carbon black is measured in accordance with JIS K6217-2:2001.

The amount of carbon black per 100 parts by mass of the rubber components is preferably 1 part by mass or more, more preferably 3 parts by mass or more, still more preferably 5 parts by mass or more, but is preferably 30 parts by mass or less, more preferably 20 parts by mass or less, still more preferably 10 parts by mass or less. When the amount is within the range indicated above, the advantageous effect tends to be better achieved.

Examples of the silica include dry silica (anhydrous silicic acid) and wet silica (hydrous silicic acid), with wet silica being preferred because it has a large number of silanol groups. Usable commercial products are available from Evonik, Tosoh Silica Corporation, Solvay Japan, Tokuyama Corporation, etc. Each of these may be used alone, or two or more of these may be used in combination.

The nitrogen adsorption specific surface area (N₂SA) of the silica is preferably 100 m²/g or more, more preferably 150 m²/g or more, still more preferably 180 m²/g or more, but is preferably 250 m²/g or less, more preferably 220 m²/g or less, still more preferably 200 m²/g or less. When the N₂SA is within the range indicated above, the advantageous effect tends to be better achieved.

The nitrogen adsorption specific surface area of the silica is measured by a BET method in accordance with ASTM D3037-81.

The amount of silica per 100 parts by mass of the rubber components is preferably 20 parts by mass or more, more preferably 40 parts by mass or more, still more preferably 50 parts by mass or more, but is preferably 100 parts by mass or less, more preferably 80 parts by mass or less, still more preferably 60 parts by mass or less. When the amount is within the range indicated above, the advantageous effect tends to be better achieved.

The silica is preferably used together with a silane coupling agent.

Any silane coupling agent may be used, and examples include sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyl tetrasulfide, 2-triethoxysilylethyl-N,N-dimethylthiocarbamoyl tetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z both available from Momentive; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. Usable commercial products are available from Evonik, Momentive, Shin-Etsu Silicone, Tokyo Chemical Industry Co., Ltd., AZmax. Co., Dow Corning Toray Co., Ltd., etc. These may be used alone or in combinations of two or more.

The amount of silane coupling agents per 100 parts by mass of the silica is preferably 3 parts by mass or more, more preferably 6 parts by mass or more, but is preferably 12 parts by mass or less, more preferably 9 parts by mass or less. When the amount is within the range indicated above, the advantageous effect tends to be better achieved.

The rubber composition may contain a wax.

Any wax may be used, and examples include petroleum waxes such as paraffin waxes and microcrystalline waxes; naturally-occurring waxes such as plant waxes and animal waxes; and synthetic waxes such as polymers of ethylene, propylene, or other similar monomers. Usable commercial products are available from Ouchi Shinko Chemical Industrial Co., Ltd., Nippon Seiro Co., Ltd., Seiko Chemical Co., Ltd., etc. Each of these may be used alone, or two or more of these may be used in combination.

The amount of waxes per 100 parts by mass of the rubber components is preferably 0.5 parts by mass or more, more preferably 1 part by mass or more, but is preferably 5 parts by mass or less, more preferably 3 parts by mass or less. When the amount is within the range indicated above, the advantageous effect tends to be better achieved.

The rubber composition may contain an oil.

Examples of the oil include process oils, plant oils, and mixtures of these oils. Examples of the process oils include paraffinic process oils, aromatic process oils, and naphthenic process oils. Examples of the plant oils include castor oil, cotton seed oil, linseed oil, rapeseed oil, soybean oil, palm oil, coconut oil, peanut oil, rosin, pine oil, pine tar, tall oil, corn oil, rice oil, safflower oil, sesame oil, olive oil, sunflower oil, palm kernel oil, camellia oil, jojoba oil, macadamia nut oil, and tung oil. Usable commercial products are available from Idemitsu Kosan Co., Ltd., Sankyo Yuka Kogyo K.K., JXTG Nippon Oil & Energy Corporation, Olisoy, H&R, Hokoku Corporation, Showa Shell Sekiyu K.K., Fuji Kosan Co., Ltd., etc. Each of these may be used alone, or two or more of these may be used in combination.

The amount of oils per 100 parts by mass of the rubber components is preferably 25 parts by mass or less, more preferably 10 parts by mass or less, still more preferably 5 parts by mass or less, and may be 0 parts by mass (the rubber composition contains substantially no oil). Because the hydrogenated conjugated diene polymer (B) functions as a plasticizer in the rubber composition, the amount of oils can be reduced to provide better fuel economy.

The rubber composition may contain an antioxidant.

Examples of the antioxidant include naphthylamine antioxidants such as phenyl-α-naphthylamine; diphenylamine antioxidants such as octylated diphenylamine and 4,4'-bis(α,α'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline antioxidants such as polymerized 2,2,4-trimethyl-1,2-dihydroquinoline; monophenolic antioxidants such as 2,6-di-t-butyl-4-methylphenol and styrenated phenol; and bis-, tris-, or polyphenolic antioxidants such as tetrakis[methylene-3-(3',5'-di-t-butyl-4'-hydroxyphenyl)propionate]methane. Usable commercial products are available from Seiko Chemical Co., Ltd., Sumitomo Chemical Co., Ltd., Ouchi Shinko Chemical Industrial Co., Ltd., Flexsys, etc. Each of these may be used alone, or two or more of these may be used in combination.

The amount of antioxidants per 100 parts by mass of the rubber components is preferably 1 part by mass or more, more preferably 2 parts by mass or more, but is preferably 6 parts by mass or less, more preferably 4 parts by mass or less. When the amount is within the range indicated above, the advantageous effect tends to be better achieved.

The rubber composition may contain stearic acid.

The stearic acid may be a conventional one. Usable commercial products are available from NOF Corporation, Kao Corporation, FUJIFILM Wako Pure Chemical Corporation, Chiba Fatty Acid Co., Ltd., etc. Each of these may be used alone, or two or more of these may be used in combination.

The amount of stearic acid per 100 parts by mass of the rubber components is preferably 1 part by mass or more, more preferably 2 parts by mass or more, but is preferably 10 parts by mass or less, more preferably 6 parts by mass or less. When the amount is within the range indicated above, the advantageous effect tends to be better achieved.

The rubber composition may contain zinc oxide.

The zinc oxide may be a conventional one. Usable commercial products are available from Mitsui Mining & Smelting Co., Ltd., Toho Zinc Co., Ltd., HakusuiTech Co., Ltd., Seido Chemical Industry Co., Ltd., Sakai Chemical Industry Co., Ltd., etc. Each of these may be used alone, or two or more of these may be used in combination.

The amount of zinc oxide per 100 parts by mass of the rubber components is preferably 1 part by mass or more, more preferably 2 parts by mass or more, but is preferably 10 parts by mass or less, more preferably 6 parts by mass or less. When the amount is within the range indicated above, the advantageous effect tends to be better achieved.

The rubber composition may contain sulfur.

Examples of the sulfur include those commonly used in the rubber industry, such as powdered sulfur, precipitated sulfur, colloidal sulfur, insoluble sulfur, highly dispersible sulfur, and soluble sulfur. Usable commercial products are available from Tsurumi Chemical Industry Co., Ltd., Karuizawa sulfur Co., Ltd., Shikoku Chemicals Corporation, Flexsys, Nippon Kanryu Industry Co., Ltd., Hosoi Chemical Industry Co., Ltd., etc. These may be used alone or in combinations of two or more.

The amount of sulfur per 100 parts by mass of the rubber components is preferably 0.5 parts by mass or more, more preferably 1.2 parts by mass or more, but is preferably 6 parts by mass or less, more preferably 3 parts by mass or less. When the amount is within the range indicated above, the advantageous effect tends to be better achieved.

The rubber composition may contain a vulcanization accelerator.

Examples of the vulcanization accelerator include thiazole vulcanization accelerators such as 2-mercaptobenzothiazole and di-2-benzothiazolyl disulfide; thiuram vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide vulcanization accelerators such as N-cyclohexyl-2-benzothiazylsulfenamide (CBS), N-tert-butyl-2-benzothiazolylsulfenamide (TBBS), N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. Usable commercial products are available from Sumitomo Chemical Co., Ltd., Ouchi Shinko Chemical Industrial Co., Ltd., etc. These may be used alone or in combinations of two or more.

The amount of vulcanization accelerators per 100 parts by mass of the rubber components is preferably 1 part by mass or more, more preferably 3 parts by mass or more, still more preferably 3.8 parts by mass or more, but is preferably 10 parts by mass or less, more preferably 8 parts by mass or less, still more preferably 6 parts by mass or less. When the amount is within the range indicated above, the advantageous effect tends to be better achieved.

In addition to the above-described components, the rubber composition may further contain additives commonly used in the tire industry, including for example organic peroxides and fillers such as calcium carbonate, talc, alumina, clay, aluminum hydroxide, and mica. The amounts of such additives are each preferably 0.1 to 200 parts by mass per 100 parts by mass of the rubber components.

The rubber composition may be prepared, for example, by kneading the above-described components using a rubber kneading machine such as an open roll mill or a Banbury mixer, and then vulcanizing the kneaded mixture.

The kneading conditions are as follows. In a base kneading step of kneading additives other than vulcanizing agents and vulcanization accelerators, the kneading temperature is usually 100 to 180°C, preferably 120 to 170°C. In a final kneading step of kneading vulcanizing agents and vulcanization accelerators, the kneading temperature is usually 120°C or lower, preferably 85 to 110°C. Then, the composition obtained after kneading vulcanizing agents and vulcanization accelerators is usually vulcanized by, for example, press vulcanization. The vulcanization temperature is usually 140 to 190°C, preferably 150 to 185°C. The vulcanization time is usually 5 to 15 minutes.

The change in hardness of the rubber composition after immersion in acetone for 24 hours can be used as an index of change in hardness over time.

The change in hardness is preferably 20% or less, more preferably 10% or less, still more preferably 5% or less, particularly preferably 4% or less, of the hardness before the immersion and may be 3% or less, 2% or less, or 0% (the hardnesses before and after immersion in acetone are substantially the same). When the change is within the range indicated above, there tends to be a small change in hardness over time, resulting in good enduring performance.

The change in hardness can be measured as described later in EXAMPLES.

The mass of the rubber composition after immersion in acetone for 24 hours can also be used as an index of change in hardness over time.

The mass is preferably 80% or more, more preferably 90% or more, still more preferably 91% or more, particularly preferably 92% or more, of the mass before the immersion and may be 94% or more, 96% or more, 98% or more, or 100% (the masses before and after immersion in acetone are substantially the same). When the mass is within the range indicated above, there tends to be a small change in hardness over time, resulting in good enduring performance.

The mass can be measured as described later in EXAMPLES.

The rubber composition may be used in tire components (i.e., as a tire rubber composition), including treads (cap treads), sidewalls, base treads, undertreads, shoulders, clinches, bead apexes, breaker cushion rubbers, rubbers for carcass cord topping, insulations, chafers, and innerliners, and side reinforcement layers of run-flat tires.

The tire of the present disclosure can be produced from the above-described rubber composition by usual methods.

Specifically, the rubber composition, before vulcanization, may be extruded into the shape of a tire component such as a tread and then assembled with other tire components in a usual manner on a tire building machine to build an unvulcanized tire, which may then be heated and pressurized in a vulcanizer to produce a tire.

Here, it is sufficient that the tire component (e.g., tread) of the tire at least partially contain the rubber composition. The entire tire component may contain the rubber composition.

The tire (e.g., pneumatic tire) may be used as: a tire for passenger cars; a tire for trucks and buses; a tire for two-wheeled vehicles; a high performance tire; a winter tire such as a studless winter tire; a run-flat tire provided with a side reinforcing layer; a noise absorber-equipped tire which includes a noise absorber such as sponge on the tire inner cavity; a sealant-attached tire which includes a sealant capable of sealing punctures either inside the tire or on the tire inner cavity; an electronic component-equipped tire which includes an electronic component such as a sensor or a radio tag either inside the tire or on the tire inner cavity, etc. The tire is suitable for passenger cars.

### EXAMPLES

The present disclosure is specifically described below with reference to examples.

The chemicals used in the examples and comparative examples are listed below.

SBR: HPR850 available from JSR Corporation
Hydrogenated copolymer (1): Production Example 1-1 described below (hydrogenated SBR, degree of hydrogenation: 95 mol%, aromatic vinyl (styrene) unit: 33% by mass, Mw: 300,000)
Hydrogenated copolymer (2): Production Example 1-2 described below (hydrogenated SBR, degree of hydrogenation: 80 mol%, aromatic vinyl (styrene) unit: 33% by mass, Mw: 300,000)
Hydrogenated copolymer (3): Production Example 1-3 described below (hydrogenated SBR, degree of hydrogenation: 95 mol%, aromatic vinyl (styrene) unit: 33% by mass, Mw: 120,000)
Carbon black: N220 (N₂SA: 114 m²/g) available from Cabot Japan K.K.
Silica: ULTRASIL VN3 (N₂SA: 180 m²/g) available from Evonik
Silane coupling agent: Si266 (bis(3-triethoxysilylpropyl)disulfide) available from Evonik
Oil: Diana Process NH-70S (aromatic process oil) available from Idemitsu Kosan Co., Ltd.
Liquid SBR: RICON 100 (Mw: 4,500) available from Cray Valley
Liquid hydrogenated SBR (1): hydrogenated product of RICON 100 (Mw: 4,500, degree of hydrogenation: 50 mol%, aromatic vinyl (styrene) unit: 25% by mass) available from Cray Valley
Liquid hydrogenated SBR (2): hydrogenated product of RICON 100 (Mw: 4,500, degree of hydrogenation: 95 mol%, aromatic vinyl (styrene) unit: 25% by mass) available from Cray Valley
Liquid hydrogenated SBR (3): Production Example 2 described below (Mw: 80,000, degree of hydrogenation: 95 mol%, aromatic vinyl (styrene) unit: 25% by mass)
Resin (1): NOVARES C10 (coumarone-indene resin, softening point: 10°C) available from Rutgers Chemicals
Resin (2): NOVARES C30 (coumarone-indene resin, softening point: 30°C) available from Rutgers Chemicals
Resin (3): Sylvares SA85 (copolymer of α-methylstyrene and styrene, softening point: 85°C) available from Arizona Chemical
Resin (4): Sylvatraxx 4150 (β-pinene resin, softening point: 116°C) available from Arizona Chemical
Antioxidant: NOCRAC 6C (N-phenyl-N'-(1,3-dimethylbutyl)-p-phenylenediamine) available from Ouchi Shinko Chemical Industrial Co., Ltd.
Stearic acid: stearic acid "TSUBAKI" available from NOF Corporation
Zinc oxide: zinc oxide #1 available from Mitsui Mining & Smelting Co., Ltd.
Wax: Ozoace 0355 available from Nippon Seiro Co., Ltd.
Sulfur: HK-200-5 (5% by mass oil-containing powdered sulfur) available from Hosoi Chemical Industry Co., Ltd.
Vulcanization accelerator (1): NOCCELER NS (N-tert-butyl-2-benzothiazylsulfenamide, TBBS) available from Ouchi Shinko Chemical Industrial Co., Ltd.
Vulcanization accelerator (2): NOCCELER D (N,N'-diphenylguanidine, DPG) available from Ouchi Shinko Chemical Industrial Co., Ltd.

### <Production Example 1-1: Production of hydrogenated copolymer (1)>

A sufficiently nitrogen-purged heat-resistant reaction vessel was charged with n-hexane, styrene, 1,3-butadiene, N,N,N',N'-tetramethylethylenediamine (TMEDA), and n-butyllithium, followed by stirring at 50°C for five hours to perform a polymerization reaction. Thereafter, the reaction solution was stirred for 20 minutes while supplying hydrogen gas at a pressure of 0.4 MPa gauge to react unreacted polymer terminal lithium with hydrogen into lithium hydride. Hydrogenation was performed using a titanocene dichloride-based catalyst at a hydrogen gas supply pressure of 0.7 MPa gauge and a reaction temperature of 90°C. Once the cumulative amount of absorbed hydrogen reached the amount corresponding to the target degree of hydrogenation, the reaction temperature was brought to room temperature, and the hydrogen pressure was returned to an ordinary pressure. Then, the reaction solution was drawn from the reaction vessel and introduced into water with stirring. The solvent was removed by steam stripping to obtain hydrogenated copolymer (1). The polymerization conversion ratio was almost 100%.

### <Production Example 1-2: Production of hydrogenated copolymer (2)>

Hydrogenated copolymer (2) was prepared as in Production Example 1, except that the amounts of the chemicals and the cumulative amount of absorbed hydrogen were changed. The polymerization conversion ratio was almost 100%.

### <Production Example 1-3: Production of hydrogenated copolymer (3)>

Hydrogenated copolymer (3) was prepared as in Production Example 1, except that the amounts of the chemicals were changed. The polymerization conversion ratio was almost 100%.

### <Production Example 2: Production of liquid hydrogenated SBR (3)>

Hexane, butadiene, and styrene together with TMEDA were introduced into a sufficiently nitrogen-purged heat-resistant reaction vessel. Next, a small amount of a solution of n-butyllithium in hexane was introduced into the polymerization vessel as a scavenger for preliminarily detoxifying impurities which serve to deactivate polymerization initiators. Then, a solution of n-butyllithium in hexane was added, followed by performing a polymerization reaction at 50°C for three hours. Three hours later, a 1M isopropanol/hexane solution was dropwise added to terminate the reaction. Subsequently, the polymerization solution was evaporated at room temperature for 24 hours and then dried in vacuo at 80°C for 24 hours to obtain a copolymer.

Next, the copolymer, n-hexane, and 10% palladium carbon were added to a pressure-resistant vessel, and the vessel was purged with nitrogen and then with hydrogen at a pressure of 5.0 kg/cm². Then, a reaction was performed until the cumulative amount of absorbed hydrogen reached the amount corresponding to the target degree of hydrogenation. Then, the reaction solution was filtrated to remove the catalyst. Subsequently, the filtrate was evaporated at room temperature for 24 hours and then dried in vacuo at 80°C for 24 hours to obtain liquid hydrogenated SBR (3). The polymerization conversion ratio was almost 100%.

### <Examples and Comparative Examples>

According to the formulation shown in Table 1, the materials other than the sulfur and vulcanization accelerators were kneaded in a 1.77 L Banbury mixer (Kobe Steel, Ltd.) at 150°C for five minutes to give a kneaded mixture. Then, the sulfur and vulcanization accelerators were added to the kneaded mixture, and they were kneaded in an open roll mill at 80°C for five minutes to give an unvulcanized rubber composition. The unvulcanized rubber composition was vulcanized at 170°C for 10 minutes to obtain a vulcanized rubber composition.

The test tires prepared as above were evaluated as described below. Table 1 shows the results.

It should be noted that all the measurements were conducted within three days after the vulcanization.

### (Mass change)

The mass of a specimen of each vulcanized rubber composition was measured.

Moreover, the measured specimen was immersed in acetone for 24 hours and dried, and then the mass was again measured.

Then, the change in mass after immersion in acetone was expressed as an index using the equation below. In general, the index is 100 or lower, and an index closer to 100 is better (a smaller change in hardness over time). An index of 90 or higher is considered acceptable. (Mass change index) = (Mass after immersion in acetone)/(Mass before immersion in acetone) × 100

The mass change index can be used to determine the mass after immersion in acetone. For example, a mass change index of 80 indicates that the mass after immersion in acetone is 80% of the mass before the immersion.

### (Hardness change)

The hardness (JIS-A hardness) at room temperature (25°C) of a specimen of each vulcanized rubber composition was measured in accordance with "Rubber, vulcanized or thermoplastic - Determination of hardness - Part 3: Durometer method" in JIS K6253-3 (2012) using a type A durometer.

Moreover, the measured specimen was immersed in acetone for 24 hours and dried, and then the hardness at room temperature was measured as described above.

Then, the change in hardness after immersion in acetone was expressed as an index using the equation below. In general, the index is 100 or lower, and an index closer to 100 is better (a smaller change in hardness over time). An index of 95 or higher is considered acceptable. (Hardness change index) = (Hardness before immersion in acetone)/(Hardness after immersion in acetone) × 100

The hardness change index can be used to determine the change (%) in hardness after immersion in acetone. For example, a hardness change index of 80 indicates that the change in hardness after immersion in acetone is 20% of the hardness before the immersion.

### (Fuel economy)

The tan δ of the vulcanized rubber compositions was measured using a viscoelastic spectrometer (RSA available from TA Instruments) at a temperature of 30°C, an initial strain of 10%, a dynamic strain of 2.5%, and a frequency of 10 Hz. The results are expressed as an index (fuel economy index) relative to the reciprocal of the tan δ value of Comparative Example 1 taken as 100. A higher index indicates better fuel economy.

### (Wet grip performance)

The tan δ of the vulcanized rubber compositions was measured using a viscoelastic spectrometer (RSA available from TA Instruments) at a temperature of 0°C, an initial strain of 10%, a dynamic strain of 0.5%, and a frequency of 10 Hz. The results are expressed as an index (wet grip performance index) relative to the tan δ value of Comparative Example 1 taken as 100. A higher index indicates better wet grip performance.

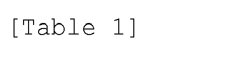

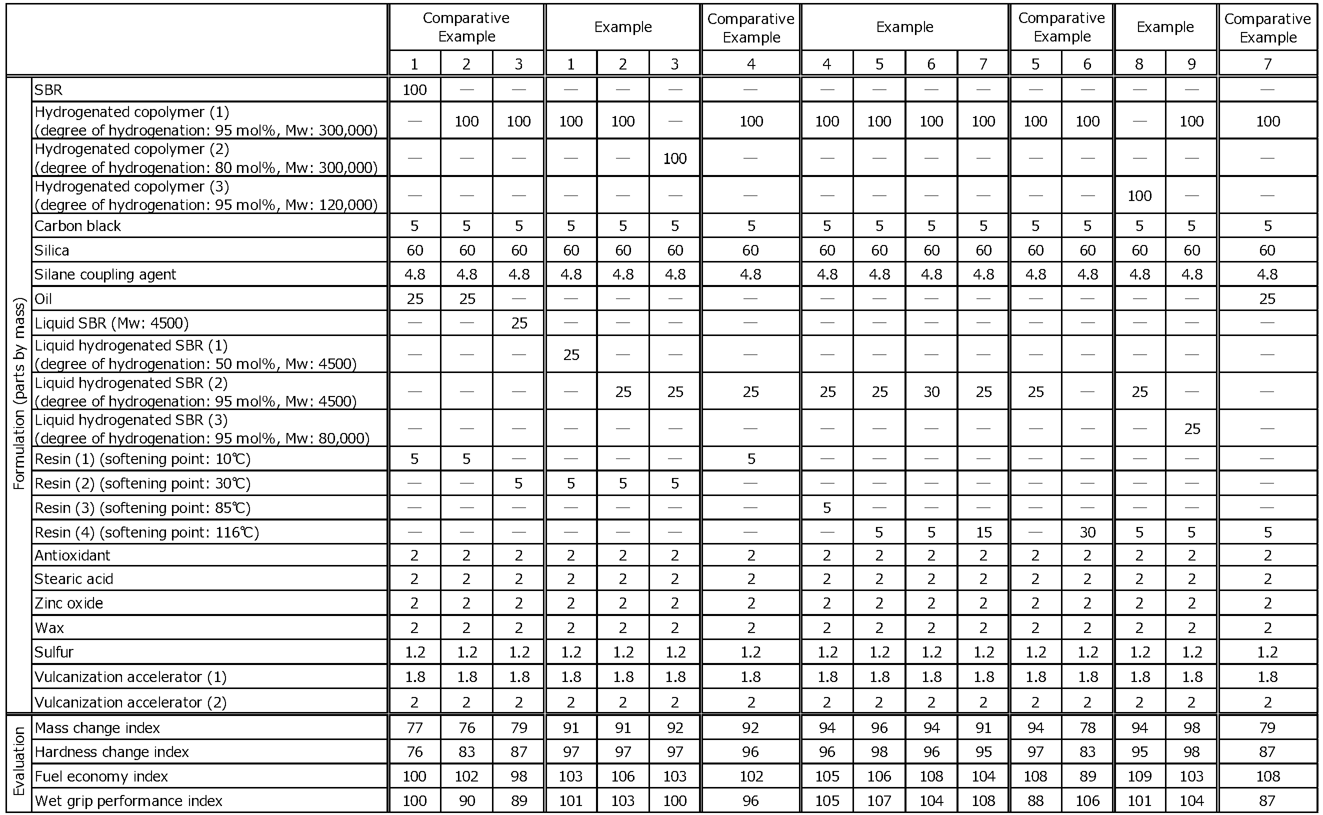

As shown in Table 1, small changes in hardness and mass and excellent enduring performance were exhibited by the examples containing a hydrogenated conjugated diene polymer (A) having a weight average molecular weight of 100,000 or more and a degree of hydrogenation of 75 mol% or higher, a hydrogenated conjugated diene polymer (B) having a weight average molecular weight of less than 100,000, and a resin having a softening point of 20°C or higher. The examples also had good fuel economy and wet grip performance.

## Claims

1. A rubber composition, comprising:
at least one hydrogenated conjugated diene polymer (A) having a weight average molecular weight of 100,000 or more and a degree of hydrogenation of 75 mol% or higher;
at least one hydrogenated conjugated diene polymer (B) having a weight average molecular weight of less than 100,000; and
at least one resin having a softening point of 20°C or higher,
wherein the hydrogenated conjugated diene polymer (B) is a copolymer of a conjugated diene compound and an aromatic vinyl compound.

2. The rubber composition according to claim 1,
wherein an absolute value of a difference in degree of hydrogenation between the hydrogenated conjugated diene polymer (A) and the hydrogenated conjugated diene polymer (B) is 90 mol% or less.

3. The rubber composition according to claim 1 or 2,
wherein the hydrogenated conjugated diene polymer (B) has a degree of hydrogenation of 25 mol% or higher.

4. The rubber composition according to any one of claims 1 to 3,
wherein the hydrogenated conjugated diene polymer (B) is present in an amount of 5 parts by mass or more per 100 parts by mass of rubber components in the rubber composition.

5. The rubber composition according to any one of claims 1 to 4,
wherein the hydrogenated conjugated diene polymer (B) and the resin are present in a combined amount of 40 parts by mass or less per 100 parts by mass of rubber components in the rubber composition.

6. The rubber composition according to any one of claims 1 to 5,
wherein a change in hardness of the rubber composition after immersion in acetone for 24 hours is 20% or less of the hardness before the immersion.

7. The rubber composition according to any one of claims 1 to 6,
wherein a mass of the rubber composition after immersion in acetone for 24 hours is 80% or more of the mass before the immersion.

8. The rubber composition according to any one of claims 1 to 7,
wherein the rubber composition comprises at least one filler selected from the group consisting of carbon black and silica.

9. The rubber composition according to any one of claims 1 to 8,
wherein the resin is at least one selected from the group consisting of coumarone-indene resins, styrene resins, and terpene resins.

10. The rubber composition according to any one of claims 1 to 9,
wherein the hydrogenated conjugated diene polymer (A) has a weight average molecular weight of 200,000 to 1,000,000 and a degree of hydrogenation of 90 to 98 mol%, and
the hydrogenated conjugated diene polymer (B) has a weight average molecular weight of 1,000 to 6,000 and a degree of hydrogenation of 40 to 98 mol%.

11. The rubber composition according to any one of claims 1 to 10,
wherein the hydrogenated conjugated diene polymer (A) and the hydrogenated conjugated diene polymer (B) are each a copolymer of a conjugated diene compound and an aromatic vinyl compound;
the hydrogenated conjugated diene polymer (A) comprises 10 to 50% by mass of structural units derived from at least one aromatic vinyl compound; and
the hydrogenated conjugated diene polymer (B) comprises 10 to 50% by mass of structural units derived from at least one aromatic vinyl compound.

12. The rubber composition according to any one of claims 1 to 11,
wherein the hydrogenated conjugated diene polymer (A) is present in an amount of 80% by mass or more based on 100% by mass of rubber components in the rubber composition.

13. The rubber composition according to any one of claims 1 to 12,
wherein the resin has a softening point of 30 to 130°C.

14. The rubber composition according to any one of claims 1 to 13,
wherein the rubber composition comprises, per 100 parts by mass of rubber components therein, 1 to 25 parts by mass of the resin, 1 to 30 parts by mass of carbon black, and 20 to 100 parts by mass of silica.

15. A tire, comprising a tire component comprising the rubber composition according to any one of claims 1 to 14.

## Patentansprüche

1. Kautschukzusammensetzung, umfassend:
mindestens ein hydriertes, konjugiertes Dien-Polymer (A), das ein gewichtsmittleres Molekulargewicht von 100.000 oder mehr und einen Hydrierungsgrad von 75 Mol-% oder höher aufweist;
mindestens ein hydriertes, konjugiertes Dien-Polymer (B), das ein gewichtsmittleres Molekulargewicht von weniger als 100.000 aufweist; und
mindestens ein Harz, das einen Erweichungspunkt von 20°C oder höher aufweist,
wobei das hydrierte, konjugierte Dien-Polymer (B) ein Copolymer einer konjugierten Dien-Verbindung und einer aromatischen Vinyl-Verbindung ist.

2. Kautschukzusammensetzung nach Anspruch 1,
wobei ein Absolutwert einer Differenz im Hydrierungsgrad zwischen dem hydrierten, konjugierten Dien-Polymer (A) und dem hydrierten, konjugierten Dien-Polymer (B) 90 Mol-% oder weniger beträgt.

3. Kautschukzusammensetzung nach Anspruch 1 oder 2,
wobei das hydrierte, konjugierte Dien-Polymer (B) einen Hydrierungsgrad von 25 Mol-% oder höher aufweist.

4. Kautschukzusammensetzung nach einem der Ansprüche 1 bis 3,
wobei das hydrierte, konjugierte Dien-Polymer (B) in einer Menge von 5 Massenteilen oder mehr pro 100 Massenteile an Kautschukkomponenten in der Kautschukzusammensetzung vorhanden ist.

5. Kautschukzusammensetzung nach einem der Ansprüche 1 bis 4,
wobei das hydrierte, konjugierte Dien-Polymer (B) und das Harz in einer Gesamtmenge von 40 Massenteilen oder weniger pro 100 Massenteile an Kautschukkomponenten in der Kautschukzusammensetzung vorhanden sind.

6. Kautschukzusammensetzung nach einem der Ansprüche 1 bis 5,
wobei eine Änderung in der Härte der Kautschukzusammensetzung nach Eintauchen in Aceton für 24 Stunden 20% oder weniger der Härte vor dem Eintauchen beträgt.

7. Kautschukzusammensetzung nach einem der Ansprüche 1 bis 6,
wobei eine Masse der Kautschukzusammensetzung nach Eintauchen in Aceton für 24 Stunden 80% oder mehr der Masse vor dem Eintauchen beträgt.

8. Kautschukzusammensetzung nach einem der Ansprüche 1 bis 7,
wobei die Kautschukzusammensetzung mindestens einen Füllstoff umfasst, der aus der Gruppe bestehend aus Ruß und Siliciumdioxid ausgewählt ist.

9. Kautschukzusammensetzung nach einem der Ansprüche 1 bis 8,
wobei das Harz mindestens eines ist, welches aus der Gruppe bestehend aus Cumaron-Inden-Harzen, Styrolharzen und Terpenharzen ausgewählt ist.

10. Kautschukzusammensetzung nach einem der Ansprüche 1 bis 9,
wobei das hydrierte, konjugierte Dien-Polymer (A) ein gewichtsmittleres Molekulargewicht von 200.000 bis 1.000.000 und einen Hydrierungsgrad von 90 bis 98 Mol-% aufweist, und
das hydrierte, konjugierte Dien-Polymer (B) ein gewichtsmittleres Molekulargewicht von 1000 bis 6000 und einen Hydrierungsgrad von 40 bis 98 Mol-% aufweist.

11. Kautschukzusammensetzung nach einem der Ansprüche 1 bis 10,
wobei das hydrierte, konjugierte Dien-Polymer (A) und das hydrierte, konjugierte Dien-Polymer (B) jeweils ein Copolymer einer konjugierten Dien-Verbindung und einer aromatischen Vinyl-Verbindung sind;
das hydrierte, konjugierte Dien-Polymer (A) 10 bis 50 Massen-% an Struktureinheiten umfasst, die von mindestens einer aromatischen Vinyl-Verbindung abgeleitet sind; und
das hydrierte, konjugierte Dien-Polymer (B) 10 bis 50 Massen-% an Struktureinheiten umfasst, die von mindestens einer aromatischen Vinyl-Verbindung abgeleitet sind.

12. Kautschukzusammensetzung nach einem der Ansprüche 1 bis 11,
wobei das hydrierte, konjugierte Dien-Polymer (A) in einer Menge von 80 Massen-% oder mehr, bezogen auf 100 Massen-% an Kautschukkomponenten in der Kautschukzusammensetzung, vorhanden ist.

13. Kautschukzusammensetzung nach einem der Ansprüche 1 bis 12,
wobei das Harz einen Erweichungspunkt von 30 bis 130°C aufweist.

14. Kautschukzusammensetzung nach einem der Ansprüche 1 bis 13,
wobei die Kautschukzusammensetzung, pro 100 Massenteile an Kautschukkomponenten darin, 1 bis 25 Massenteile des Harzes, 1 bis 30 Massenteile Ruß und 20 bis 100 Massenteile Siliciumdioxid umfasst.

15. Reifen, umfassend eine Reifenkomponente, welche die
Kautschukzusammensetzung nach einem der Ansprüche 1 bis 14 umfasst.

## Revendications

1. Composition de caoutchouc, comprenant :
au moins un polymère diénique conjugué hydrogéné (A) ayant une masse moléculaire moyenne en masse de 100 000 ou plus et un degré d'hydrogénation de 75 % en moles ou plus ;
au moins un polymère diénique conjugué hydrogéné (B) ayant une masse moléculaire moyenne en masse inférieure à 100 000 ; et
au moins une résine ayant un point de ramollissement de 20 °C ou plus,
dans laquelle le polymère diénique conjugué hydrogéné (B) est un copolymère d'un composé diénique conjugué et d'un composé vinylique aromatique.

2. Composition de caoutchouc selon la revendication 1,
dans laquelle une valeur absolue d'une différence de degré d'hydrogénation entre le polymère diénique conjugué hydrogéné (A) et le polymère diénique conjugué hydrogéné (B) est de 90 % en moles ou moins.

3. Composition de caoutchouc selon la revendication 1 ou 2,
dans laquelle le polymère diénique conjugué hydrogéné (B) a un degré d'hydrogénation de 25 % en moles ou plus.

4. Composition de caoutchouc selon l'une quelconque des revendications 1 à 3,
dans laquelle le polymère diénique conjugué hydrogéné (B) est présent en une quantité de 5 parties en masse ou plus pour 100 parties en masse de composants de caoutchouc dans la composition de caoutchouc.

5. Composition de caoutchouc selon l'une quelconque des revendications 1 à 4,
dans laquelle le polymère diénique conjugué hydrogéné (B) et la résine sont présents en une quantité combinée de 40 parties en masse ou moins pour 100 parties en masse de composants de caoutchouc dans la composition de caoutchouc.

6. Composition de caoutchouc selon l'une quelconque des revendications 1 à 5,
dans laquelle un changement de dureté de la composition de caoutchouc après immersion dans de l'acétone pendant 24 heures est égale à 20 % ou moins de la dureté avant l'immersion.

7. Composition de caoutchouc selon l'une quelconque des revendications 1 à 6,
dans laquelle une masse de la composition de caoutchouc après immersion dans de l'acétone pendant 24 heures est égale à 80 % ou plus de la masse avant l'immersion.

8. Composition de caoutchouc selon l'une quelconque des revendications 1 à 7,
dans laquelle la composition de caoutchouc comprend au moins une charge choisie parmi le groupe constitué de noir de carbone et de silice.

9. Composition de caoutchouc selon l'une quelconque des revendications 1 à 8,
dans laquelle la résine est au moins un choisi parmi le groupe constitué de résines de coumarone-indène, de résines de styrène et de résines de terpêne.

10. Composition de caoutchouc selon l'une quelconque des revendications 1 à 9,
dans laquelle le polymère diénique conjugué hydrogéné (A) a une masse moléculaire moyenne en masse de 200 000 à 1 000 000 et un degré d'hydrogénation de 90 à 98 % en moles, et
le polymère diénique conjugué hydrogéné (B) a une masse moléculaire moyenne en masse de 1 000 à 6 000 et un degré d'hydrogénation de 40 à 98 % en moles.

11. Composition de caoutchouc selon l'une quelconque des revendications 1 à 10,
dans laquelle le polymère diénique conjugué hydrogéné (A) et le polymère diénique conjugué hydrogéné (B) sont chacun un copolymère d'un composé diénique conjugué et d'un composé vinylique aromatique ;
le polymère diénique conjugué hydrogéné (A) comprend 10 à 50 % en masse de motifs structuraux dérivés d'au moins un composé vinylique aromatique ; et
le polymère diénique conjugué hydrogéné (B) comprend 10 à 50 % en masse de motifs structuraux dérivés d'au moins un composé vinylique aromatique.

12. Composition de caoutchouc selon l'une quelconque des revendications 1 à 11,
dans laquelle le polymère diénique conjugué hydrogéné (A) est présent en une quantité de 80 % en masse ou plus sur la base de 100 % en masse de composants de caoutchouc dans la composition de caoutchouc.

13. Composition de caoutchouc selon l'une quelconque des revendications 1 à 12,
dans laquelle la résine a un point de ramollissement de 30 à 130 °C.

14. Composition de caoutchouc selon l'une quelconque des revendications 1 à 13,
dans laquelle la composition de caoutchouc comprend, pour 100 parties en masse de composants de caoutchouc dans celle-ci, de 1 à 25 parties en masse de la résine, 1 à 30 parties en masse de noir de carbone, et 20 à 100 parties en masse de silice.

15. Pneumatique, comprenant un composant de pneumatique comprenant la composition de caoutchouc selon l'une quelconque des revendications 1 à 14.
